# EUROPÄISCHE PATENTSCHRIFT

(11) **EP 1 662 349 B1**
(45) Veröffentlichungstag und Bekanntmachung des Hinweises auf die Patenterteilung: **09.01.2008**
(21) Anmeldenummer: 05109430.8
(22) Anmeldetag: 11.10.2005
(51) Int. Cl.: G05B 19/406, G05B 19/042, F16P 3/00

(54) **Absicherung von Maschinen in Abhängigkeit von deren Zustand**
Safeguarding of machines dependent on the status of the machines
Protection de machines dépendant des conditions des machines

(30) Priorität: 17.11.2004 DE 102004055229
(43) Veröffentlichungstag der Anmeldung: 31.05.2006
(73) Patentinhaber: Heidelberger Druckmaschinen Aktiengesellschaft, 69115 Heidelberg (DE)
(72) Erfinder: Grimm, Ulrich, 69234 Dielheim (DE); Huschle, Carsten, 69242 Rettigheim (DE); Wolf, Thomas, Dr., 76137 Karlsruhe (DE)

(56) Entgegenhaltungen:
- EP-A- 1 342 946
- DE-A1- 4 016 169
- DE-A1- 10 216 122
- DE-A1- 19 962 497

## Beschreibung

Die vorliegende Erfindung betrifft ein Verfahren und eine Vorrichtung zur Absicherung gefährlicher Bereiche bei Maschinen, wobei ein solcher gefährlicher Bereich mit wenigstens einem Sensor überwacht wird, welcher zur Identifikation von in den gefährlichen Bereich eindringenden Objekten geeignet ist und mit einer Maschinensteuerung in Verbindung steht.

Es sind Verfahren und Schutzvorrichtungen bekannt, mit welchen Maschinen abgesichert werden können, wobei zwischen erlaubtem und unerlaubtem Eindringen von bestimmten Objekten unterschieden werden kann. Eine derartige Vorrichtung ist aus der US 2003/0164447 A1 bekannt und sichert den Gefahrenbereich einer Metall verarbeitenden Maschine ab. Die Öffnung zum Gefahrenbereich der Metall verarbeitenden Maschine wird dabei zunächst mittels einer Lichtschranke abgesichert, wobei die Lichtschranke in der Lage ist, zwischen dem Eindringen von erlaubten Werkstücken und verbotenen Körperteilen des Bedienpersonals zu unterscheiden. Die Unterscheidung geschieht dadurch, dass die Werkstücke beim Durchdringen der Lichtschranke auf Grund ihrer geringen Dicke lediglich einen Lichtstrahl verdunkeln, während Gliedmaßen des Bedienpersonals aufgrund ihrer größeren Abmessungen wenigstens zwei Lichtstrahlen nebeneinander verdunkeln. Solange nur ein Lichtstrahl verdunkelt wird, verbleibt die Metall verarbeitende Maschine im ganz normalen Betriebszustand, während beim Eindringen von Körperteilen des Bedienpersonals die Maschine sofort abgeschaltet wird.

Eine solche Art der Absicherung ist jedoch bei gefährlichen Bereichen bei Druckmaschinen nicht zweckmäßig, da hier im Bereich des Auslegers und des Anlegers einer Bogendruckmaschine unter bestimmten Bedingungen Eingriffe in die gefährlichen Bereiche durch das Bedienpersonals während des Betriebs erforderlich sind. Ein solches Eindringen wird jedoch durch die Lösung nach dem Stand der Technik nicht erlaubt.

Aus der Offenlegungsschrift DE 102 16 122 A1 ist ein Verfahren zur Verfassung von zwei oder mehr beweglichen Objekten in einem Überwachungsbereich bekannt, wobei der zu überwachende Bereich mittels eines horizontalen Lichtgitters gesichert wird, das aus einer Mehrzahl von zueinander parallelen Lichtschranken besteht. Dabei kann zwischen Objekten unterschieden werden, welche in einen zu überwachenden Bereich eindringen dürfen, und solchen, die das nicht dürfen, dazu zählen zum Beispiel Menschen. Das horizontale Lichtgitter kann die Objekte dadurch unterscheiden, dass bei erlaubten Objekten verschiedene Kriterien erfüllt sein müssen. Wenn diese Kriterien nicht erfüllt sind, so geht die Auswertung der Lichtschranke davon aus, dass ein unzulässiges Objekt, zum Beispiel ein gefährdeter Mensch, den geschützten Bereich betritt. Als Kriterien dienen die maximale Größe des Objekts, der Abstand bzw. die Abstände zwischen den Objekten, außerdem optional die Anzahl der Objekte, die Reihenfolge der Objekte sowie Objektbewegungen. Bei Objektbewegungen werden diese mit gespeicherten Mustern von Objektbewegungen verglichen und geprüft, ob diese mit zulässigen gespeicherten Objektbewegungen übereinstimmen.

Die Offenlegungsschrift DE 199 62 497 A1 zeigt eine Schaltungsanordnung zum sicheren Abschalten einer Anlage in Abhängigkeit von einem Betriebszustand der Anlage. Als Mcldcgcrät zur Überwachung des Gefahrenbereichs dient auch hier eine Sicherheitslichtschranke, welche in Abhängigkeit des Betriebszustands der Anlage unterschiedliche Signale abgibt. Dabei führt die Schaltungsanordnung ständig einen Selbsttest durch, um festzustellen, dass die Anlage ordnungsgemäß funktioniert. Dabei wird mittels eines Taktsignals, welches dem Ausgangssignal des Meldegeräts wie zum Beispiel einer Lichtschranke überlagert wird, die Funktionsfähigkeit des Gerätes permanent getestet.

Es ist Aufgabe der Erfindung, ein verbessertes Verfahren und eine verbesserte Vorrichtung zum Absichern gefährlicher Bereiche bei Maschinen zu schaffen, welche mit erhöhter Zuverlässigkeit zwischen erlaubtem und unerlaubtem Eindringen in den Gefahrenbereich zu unterscheiden in der Lage sind und auch das Eindringen von eigentlich unerlaubten Objekten in den gefährlichen Bereich unter bestimmten Umständen erlauben.

Erfindungsgemäß wird die Aufgabe durch Patentanspruch 1 und Patentanspruch 11 gelöst. Weitere vorteilhafte Ausgestaltungen der Erfindung sind den Unteransprüchen und den Zeichnungen zu entnehmen.

Zur Absicherung gefährlicher Bereiche bei Maschinen werden diese mit einem Sensor überwacht, welcher in der Lage ist, in den gefährlichen Bereich eindringende Objekte zu identifizieren. Damit ist es grundsätzlich möglich, zwischen Objekten zu unterscheiden, welche in den gefährlichen Bereich eindringen dürfen und verbotenen Objekten. Die erlaubten und verbotenen Objekte werden dazu in zwei Klassen eingeteilt, so dass jedes identifizierte Objekt entweder in die erlaubte oder die verbotene Klasse fällt. Solange ein erlaubtes Objekt in den gefährlichen Bereich eindringt, wie wenn z. B. ein neuer Bogenstapel in den Anleger eingebracht wird, läuft die Maschine ganz normal weiter. Dringt ein unerlaubtes Objekt in den gefährlichen Bereich ein, so würde nach dem Stand der Technik die Maschine sofort abgeschaltet. Gemäß der vorliegenden Erfindung wird nun jedoch noch der Betriebszustand der Maschine entsprechend berücksichtigt, so dass die Maschine nur dann tatsächlich abgeschaltet wird, wenn aufgrund des aktuellen Betriebszustands im gefährlichen Bereich der Maschine auch ein akute Gefahr des Bedienpersonal vorliegt. Sind z. B. bewegliche Teile im gefährlichen Bereich, welche eine Quetschgefahr für das Bedienpersonal darstellen, aufgrund des aktuellen Betriebszustands ohnehin stillgesetzt, so muss die Maschine selbst nicht stillgesetzt werden. Die Schutzvorrichtung berücksichtigt also immer das akute Verletzungspotential für das Bedienpersonal und nimmt die Maschine nur dann außer Betrieb, wenn das Verletzungspotential im Gefahrenbereich auch tatsächlich gegeben ist. Dies erhöht die Verfügbarkeit der Maschine.

In einer ersten Ausgestaltung der Erfindung ist vorgesehen, dass der Sensor dazu geeignet ist, zwischen menschlichen Körperteilen und Gegenständen zu unterscheiden. Mit dieser Ausgestaltung der Erfindung ist sichergestellt, dass bei akuter Gefährdung im gefährlichen Bereich beim Eindringen von menschlichen Körperteilen die Maschine sofort in einen sicheren Zustand überführt wird, während das Einbringen von Gegenständen wie z. B. beim Stapelwechsel im Anleger oder Ausleger einer Druckmaschine keinen Maschinenstopp auslöst.

Vorteilhafter Weise erfolgt mittels des Sensors eine dreidimensionale Abtastung des in den gefährlichen Bereich eindringenden Objekts. Ein solcher Sensor stellt eine 3-D-Kamera dar, welche es erlaubt, das eindringende Objekt aufgrund seiner äußeren Formgestaltung eindeutig zu identifizieren. Mittels einer solchen 3-D-Kamera ist weiterhin möglich, das eindringende Objekt auch in seiner Eindringtiefe zu erfassen so dass die Maschine erst dann abgestellt wird, wenn das Objekt soweit in den gefährlichen Bereich eingedrungen ist, dass unmittelbar Gefahr bevorsteht. Zudem können auf diese Art und Weise in Abhängigkeit des jeweiligen Betriebszustands der Maschine und den daraus resultierenden unterschiedlichen Gefährdungspotentialen unterschiedliche Eindringtiefen für unterschiedliche Objekte gestattet werden. Zu den zwei Klassen von erlaubten und unerlaubten Objekten können in diesem Fall weitere Klassen hinzukommen, in welchen die erlaubten und unerlaubten Objekte noch in Bezug auf ihre Eindringtiefe in Abhängigkeit des jeweiligen Maschinenzustands eingeteilt werden. So kann z. B. im Anlegerbereich, bei einer Stapeltragplatte mit dem Reststapel, die sich im oberen Bereich befindet, der untere Bereich solange für das Bedienpersonal zum Betreten frei gegeben werden, bis sich die Stapeltragplatte wieder nach unten bewegt. Wird die Bewegung der Stapeltragplatte nach unten eingeleitet, befindet sich die Maschine wieder in einem anderen Betriebszustand, welche eine sofortige Abschaltung der Maschine bewirkt, falls sich noch Bedienpersonal unterhalb der Stapeltragplatte des Anlegerstapels befinden sollte.

In einer vereinfachten Ausführungsform der Erfindung ist als Sensor eine Lichtschranke oder ein Lichtvorhang installiert. Unter einem Lichtvorhang sind dabei mehrere in einer Ebene angeordnete Lichtschranken zu verstehen. Auch mit diesen Lichtschranken ist es möglich, zumindest grobe Einteilungen zwischen erlaubten und unerlaubten Objekten vorzunehmen. Beim Einsatz der Lichtschranken ist selbstverständlich darauf zu achten, dass sich Gegenstände und menschliche Körperteile immer einwandfrei auseinander halten lassen, so dass die menschlichen Körperteile immer den unerlaubten Objekten zugeordnet werden.

In einer vorteilhaften Ausgestaltung der Erfindung ist vorgesehen, dass die Maschinensteuerung auf gefährliche Teile der Maschine im gefährlichen Bereich einwirkt. In diesem Fall muss nicht die gesamte Maschine stillgesetzt werden, wenn ein unerlaubtes Objekt in den Gefahrenbereich eingedrungen ist, sondern es werden nur die Verletzungsgefahr verursachenden gefährlichen Teile der Maschine entweder stillgesetzt oder in einen sicheren Zustand gebracht, so dass das unerlaubte Objekt mit den gefährlichen Teilen nicht mehr in Berührung kommen kann und so vor Verletzungen geschützt ist.

Des Weiteren kann vorgesehen sein, dass die Sicherung des gefährlichen Bereichs durch Einwirken der Maschinensteuerung in Abhängigkeit der mittels des Sensors festgestellten Eindringbewegung des identifizierten Objekts erfolgt. Mittels des Sensors ist es möglich, die Bewegung des in den gefährlichen Bereich eindringenden Objekts zu erfassen. Bewegt sich das Objekt auf die gefährlichen Teile der Maschine zu, so muss die Maschine abgeschaltet bzw. in einen sicheren Zustand versetzt werden. Sollte sich jedoch die Bewegungsrichtung des Objekts vor dem Auftreten einer akuten Verletzungsgefahr ändern, so dass die Bewegung von den gefährlichen Teilen der Maschine wegführt, so muss die Maschine nicht abgeschaltet werden und kann stattdessen weiterlaufen.

Neben der Bewegungsrichtung kann auch die Eindringgeschwindigkeit des identifizierten Objekts berücksichtigt werden. Wenn das Objekt mit einer hohen Geschwindigkeit in den gefährlichen Bereich eindringt, müssen die gefährlichen Teile der Maschine oder die gesamte Maschine entsprechend schneller abgeschaltet werden, als wenn sich das Objekt mit einer langsamen Geschwindigkeit nähert. Dies kommt daher, dass selbst bei einer sofortigen Abschaltung der Maschine und einer etwaigen durchgeführten Bremsung der beweglichen gefährlichen Teile eine gewisse Nachlauf- bzw. Bremszeit und auch Reaktionszeit aufgrund der Trägheit von rotierenden Massen oder bewegten Massen in der Maschine berücksichtigt werden muss.

Weiterhin kann vorgesehen sein, dass die Sicherung des gefährlichen Bereichs durch Einwirkung der Maschinensteuerung in Abhängigkeit der mittels des Sensors erkannten Form des identifizierten Objekts erfolgt. Anhand der Form des identifizierten Objekts kann z. B. zwischen Gegenständen und menschlichen Gliedmaßen unterschieden werden. Außerdem können auch Gegenstände in unterschiedliche Klassen eingeteilt werden, so dass z. B. dass Einbringen eines Stapels in den Anleger einer Bogendruckmaschine erlaubt wird, das versehentliche Einbringen von Werkzeug durch das Bedienpersonal aber auch erkannt wird und zum Maschinenstillstand führt. In diesem Fall wird das Bedienpersonal nicht nur vor Gefahren geschützt, welche beim Auftreffen von Werkzeug auf bewegliche Teile der Maschine z. B. durch ein Herausschleudern des Werkzeugs auftreten können, sondern zugleich wird auch die Mechanik der Maschine geschützt, welche sich sonst durch das Einbringen von Werkzeug verklemmen könnte. In diesem Fall dient die Schutzvorrichtung also nicht nur dem Schutz des Bedienpersonals sondern auch dem Schutz der Maschine.

Die vorliegende Erfindung wird nun anhand mehrerer Figuren näher beschrieben und erläutert. Es zeigen:
Fig. 1: eine Bogenrotationsdruckmaschine mit einem Anleger und einem Ausleger,
Fig. 2: einen überwachten gefährlichen Bereich am Ausleger und
Fig. 3: den Einsatz einer Lichtschranke zur Überwachung des gefährlichen Bereichs am Ausleger einer Druckmaschine.

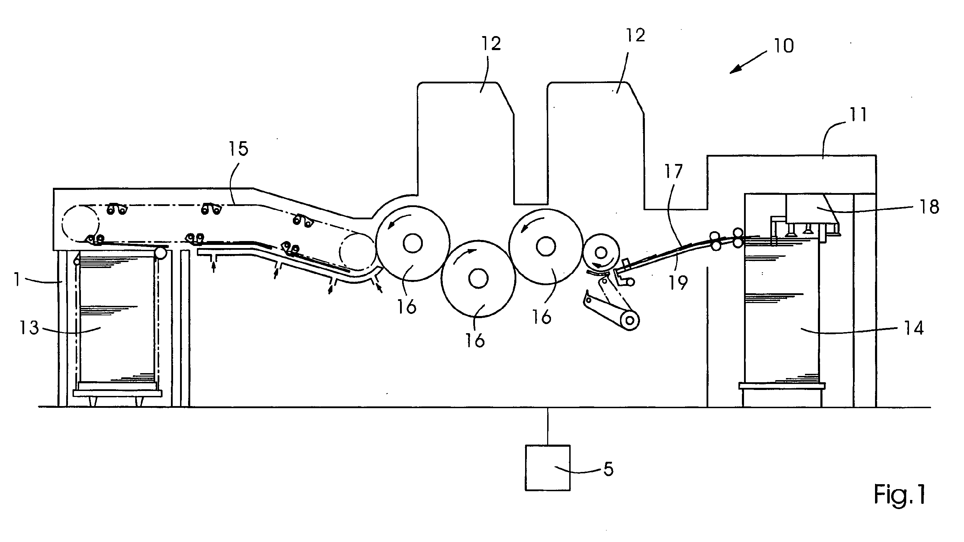

Fig. 1 zeigt eine Druckmaschine 10, welche aus einem Bogenanleger 11 zwei Druckwerken 12 und einem Bogenausleger 1 besteht. Im Bogenanleger 11 werden von einem Anlegerstapel 14 Bogen 17 mittels eines Saugkopfs 18 entnommen und vereinzelt und dann über einen Saugbändertisch 19 den Druckwerken 12 zugeführt. Durch die Druckwerke 12 werden die Bogen 17 mittels Transportzylindern 16 transportiert und im bedruckten Zustand an den Ausleger 1 übergeben. Der Transport im Ausleger 1 vom letzten Druckwerk 12 bis zum Auslegerstapel 13 wird dabei von Greiferketten 15 übernommen, welche den Bogen 17 an wenigstens einer Seite ergreifen und auf dem Auslegerstapel 13 ablegen. Die Druckmaschine 10 wird im Betrieb durch die elektronische Maschinensteuerung 5 gesteuert, welche die Eingaben des Bedienpersonals umsetzt.

Sowohl der Bogenanleger 11 als auch der Bogenausleger 1 stellen eine erhebliche Gefahrenquelle dar, da aufgrund der sich bewegenden Bauteile eine erhebliche Verletzungsgefahr für das Bedienpersonal besteht. Auf der anderen Seite können die gefährlichen Bereiche im Inneren des Bogenanlegers 11 und des Bogenauslegers 1 auch nicht einfach durch mechanische Schutzvorrichtung gegen Eingriffe völlig gesperrt werden, da gewisse Eingriffe zum Betrieb der Druckmaschine 10 erforderlich sind. So muss im Bogenanleger 11 nach dem Aufbrauchen des Anlegerstapels 14 die leere Palette entnommen werden und ein neuer Anlegerstapel 14 eingebracht werden. Um den Betrieb der Druckmaschine 10 nicht zu unterbrechen, kann der Wechsel des Anlegerstapels 14 bei laufendem Betrieb vorgenommen werden. Ähnliches gilt für den Ausleger 1, an dem der Auslegerstapel 13 mit den bedruckten Bogen in bestimmten zeitlichen Abständen entnommen werden muss, um Platz für neue ankommende bedruckte Bogen 17 zu schaffen. Außerdem muss dem Bedienpersonal die Möglichkeit geboten werden, in bestimmten zeitlichen Abständen Kontrollen des Druckbilds auf den Bogen 17 im Auslegerstapel 13 vorzunehmen. Zu diesem Zweck werden vom Bedienpersonal meist einzelne Bogen 17 aus dem Auslegerstapel 13 entnommen und auf einem Prüfpult begutachtet. Es muss also während des Betriebs der Druckmaschine 10 möglich sein, zumindest in bestimmte Bereiche des Anlegers 11 und des Auslegers 1 eingreifen zu können. Aus Sicherheitsgründen müssen jedoch die gefährlichen Bereiche im Anleger 11 und im Ausleger 1 entsprechend abgesichert werden.

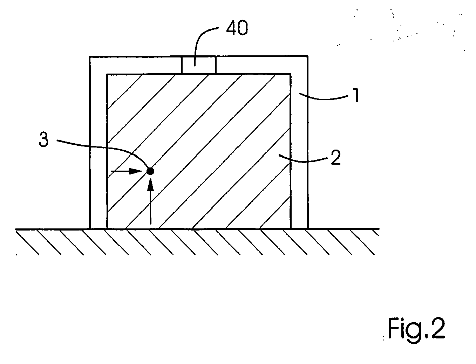

Fig. 2 zeigt eine Möglichkeit, den gefährlichen Bereich im Ausleger 1 abzusichern. Die in Fig. 2 gezeigte Möglichkeit zur Absicherung einer Seite des Bogenauslegers 1 kann selbstverständlich auf allen vier Seiten des Bogenauslegers 1 angewandt werden und ebenso im Bogenanleger 11 oder an anderen Öffnungen der Druckmaschine 10. Der Bogenausleger 1 weist gemäß Fig. 2 wenigstens eine Öffnung 2 auf, durch welche das Bedienpersonal in den gefährlichen Bereich im Inneren des Auslegers 1 eingreifen kann. Bei entsprechend großen Druckmaschinen 10 besteht sogar die Möglichkeit, dass das Bedienpersonal den gefährlichen Bereich mit dem ganzen Körper betreten kann, hier besteht dann akute Lebensgefahr. Aus diesem Grund wird die Zutrittsöffnung 2 mittels eines Sensors 40 überwacht, um das Eindringen von Gegenständen oder Personen in den Ausleger 1 zu detektieren. In Fig. 2 ist der Sensor 40 als eine Art Radar ausgeführt, welches nicht nur das Eindringen in den gefährlichen Bereich feststellt, sondern auch den genauen Ort 3 des Eindringens in den gefährlichen Bereich. So gibt der Ort 3 in Fig. 2 z. B. den Eindringort eines Arms einer Person an, welche in das Innere des Auslegers 1 eingreifen möchte. Befinden sich an dem Ort des Eingriffs 3 keine unmittelbar das Bedienpersonal gefährdenden Elemente des Auslegers 1, so muss die Druckmaschine 10 nicht notwendigerweise abgeschaltet werden. Erfolgt der Eingriff jedoch an einem anderen Ort, z. B. im oberen Bereich der Öffnung 2, in dem die Gefahr besteht, dass die eingreifende Person ihre Finger und ihren Arm in den Bereich der gefährlichen Greiferketten 15 bringen könnte, so wird die Maschine 10 sofort stillgesetzt. Zusätzlich wird noch der Betriebszustand der Maschine 10 mit berücksichtigt. So stellt ein Eindringort 3 in der Nähe der Greiferketten 15 nur dann eine Gefahr dar, wenn sich diese auch bewegen. Wenn keine Bogen 17 gefördert werden, stehen die Greiferketten 15 still und ein Eindringort 3 in der Nähe der Greiferketten 15 führt nicht zu einer gefährlichen Situation für dort eindringendes Bedienpersonal, weshalb ein Maschinenstopp in diesem Fall nicht erforderlich ist.

In einer alternativen Ausgestaltung kann auch vorgesehen sein, dass nur die Greiferketten am Ausleger 15 abgeschaltet werden, wenn diese über einen separaten Antrieb verfügen. Wenn die Maschinensteuerung 5 in Abhängigkeit des durch den Sensor 40 ermittelten Eindringorts 3 keine unmittelbare Gefahr für das Bedienpersonal erkennen kann, so kann trotzdem ein akustischer oder optischer Alarm ausgegeben werden, um das Bedienpersonal auf das Eindringen in den gefährlichen Bereich hinzuweisen.

An Stelle des Sensors 40 kann auch eine 3-D-Kamera installiert sein, welche den Querschnitt 2 und den Innenraum des gefährlichen Bereichs überwacht. Diese Kamera kann neben der Form und damit der Identifikation eines eindringenden Objekts 8, 13 auch die Eindringtiefe des Objekts 8, 13 ermitteln. Somit können auch Bewegungsänderungen des Objekts 8, 13 im gefährlichen Bereich erkannt werden. Sobald sich das Objekt 8, 13 in Richtung auf die Gefahrenquelle wie die Greiferketten 15 zu bewegt, erfolgt bei akuter Verletzungsgefahr eine Abschaltung der Druckmaschine 10.

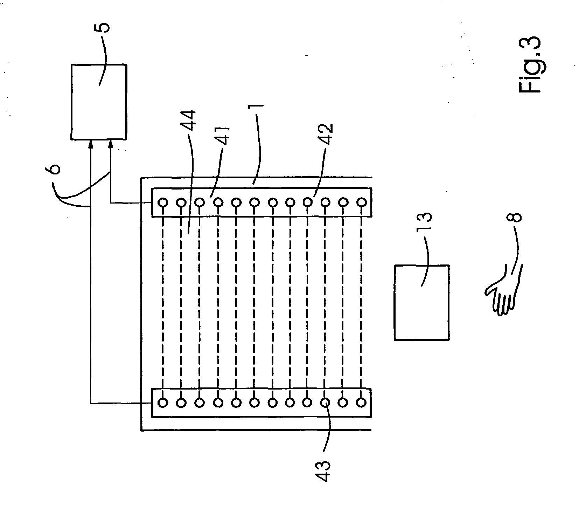

In einer Ausführungsform gemäß Fig. 3 wird als Sensor 40 eine Lichtschranke 41 eingesetzt, welche ebenfalls wie der Sensor 40 über Kommunikationsverbindungen 6 mit der Maschinensteuerung 5 der Druckmaschine 10 in Verbindung steht. Die Lichtschranke 41 bedeckt mit ihren Lichtstrahlen die gesamte Öffnung 2 des Anlegers 1, so dass das Bedienpersonal nicht an den Lichtstrahlen vorbei in das Innere des Auslegers eindringen kann. Damit stellt die Öffnung 2 den Sicherheitsbereich 44 dar, welcher auf ein Eindringen von Objekten 8, 13 überwacht wird. Die Lichtstrahlen der Lichtschranke 41 werden dabei von auf der einen Seite der Lichtschranke angeordneten Lichtdioden 42 erzeugt, um auf der gegenüberliegenden Seite durch Fotodioden 43 erfasst zu werden. Sobald ein Gegenstand oder eine Person in den gefährlichen Bereich eindringen möchte, werden ein oder mehrere Lichtstrahlen unterbrochen, so dass auf die entsprechende Fotodiode 43 kein Licht mehr fällt. Auf diese Art und Weise ist es möglich, festzustellen, welcher der Lichtstrahlen tatsächlich unterbrochen wurde. Das Eindringen einer Hand 8 des Bedienpersonals unterbricht dabei weniger Lichtstrahlen als das Eindringen oder Entfernen des gesamten Auslegerstapels 13. Dringt das Bedienpersonal mit seiner Hand 8 durch die Öffnung 2 im Ausleger 1, so wird wenigstens einer der Lichtstrahlen der Lichtschranke 41 unterbrochen. Die Position dieses Lichtstrahls wird an die Maschinensteuerung 5 übertragen, welche dann in Abhängigkeit der festgestellten Position des Lichtstrahls entsprechende Maßnahmen ergreift. Stellt das Durchdringen dieses Lichtstrahls keine potentielle Verletzungsgefahr dar, so stellt die Maschinensteuerung 5 die Druckmaschine 10 bzw. den Ausleger 1 nicht ab und kann stattdessen ein akustisches oder optisches Warnsignal ausgeben. Wird durch die Hand 8 des Bedieners jedoch ein Lichtstrahl unterbrochen, hinter dem eine unmittelbare Verletzungsgefahr droht, so gibt die Maschinensteuerung 5 ein entsprechendes Kommando an den Antrieb der Druckmaschine 10, welcher daraufhin sofort stillgesetzt wird. Die Lichtschranke 41 mit einzeln auswertbaren Lichtstrahlen ermöglicht es so, den Sicherheitsbereich 44 der Öffnung 2 ortsabhängig auszuwerten. Dabei wird je nach Maschinenzustand unterschieden ob ein Verdecken eines Lichtstrahls durch ein eindringendes Objekt zu einer Gefahrensituation führt oder nicht. Bewegen sich z.B. die Greiferketten 15 im Ausleger 1 nicht, so führt ein Unterbrechen der Lichtstrahlen im oberen Bereich des Auslegers 1 nicht zum Maschinenstillstand. Droht jedoch eine Gefahr durch den Auslegerstapel 13, weil dieser sich ebenfalls im oberen Bereich befindet, so führt eine Unterbrechung desselben Lichtstrahls zum Maschinenstopp. Die Berücksichtigung des Betriebszustands der Maschine erlaubt eine bessere Verfügbarkeit der Maschine, da nur noch dann abgeschaltet werden muss, wenn dies unbedingt notwendig ist.

### Bezugszeichenliste

- 1: Ausleger
- 2: Öffnung im Ausleger
- 3: Ortskoordinaten des Eintritts
- 5: Maschinensteuerung
- 6: Kommunikationsverbindung
- 8: Hand
- 10: Druckmaschine
- 11: Anleger der Druckmaschine
- 12: Druckwerk
- 13: Auslegerstapel
- 14: Anlegerstapel
- 15: Greiferketten im Ausleger
- 16: Transportzylinder
- 17: Bogen
- 18: Saugkopf
- 19: Saugbändertisch
- 40: Sensor
- 41: Lichtschranke
- 42: Leuchtdiode
- 43: Fotodiode
- 44: Sicherheitsbereich

## Patentansprüche

1. Verfahren zur Absicherung gefährlicher Bereiche bei Maschinen (1, 10, 11), wobei ein solcher gefährlicher Bereich mit wenigstens einem Sensor (40, 41) überwacht wird, welcher zur Identifikation von in den gefährlichen Bereich eindringenden Objekten (8, 13) geeignet ist und mit einer Maschinensteuerung (5) in Verbindung (6) steht, und wobei beim Eindringen eines Objekts (8, 13) in den gefährlichen Bereich dieses Objekt (8, 13) mittels des Sensors (40, 41) identifiziert wird und in Abhängigkeit der Identifikation und des jeweiligen Betriebszustands der Maschine (1, 10, 11) von der Maschinensteuerung (5) auf den Zustand des gefährlichen Bereichs der Maschine (1, 10, 11) eingewirkt wird,
**dadurch gekennzeichnet,**
**dass** mittels des Sensors (40, 41) eine dreidimensionale Abtastung des in den gefährlichen Bereich eindringendes Objektes (8, 13) erfolgt.

2. Verfahren nach Anspruch 1,
**dadurch gekennzeichnet,**
**dass** der Sensor (40) eine 3-D-Kamera ist.

3. Verfahren nach einem der vorhergehenden Ansprüche,
**dadurch gekennzeichnet,**
**dass** die Maschinensteuerung (5) auf gefährliche Teile (15) der Maschine (1, 10, 11) im gefährlichen Bereich einwirkt.

4. Verfahren nach Anspruch 3,
**dadurch gekennzeichnet,**
**dass** die Maschinensteuerung (5) gefährliche Teile (15) der Maschine (1, 10, 11) im gefährlichen Bereich in einen sicheren Zustand versetzt.

5. Verfahren nach einem der vorhergehenden Ansprüche,
**dadurch gekennzeichnet,**
**dass** die Sicherung des gefährlichen Bereichs durch Einwirkung der Maschinensteuerung (5) in Abhängigkeit der mittels des Sensors (40, 41) festgestellten Eindringbewegung des identifizierten Objekts (8, 13) erfolgt.

6. Verfahren nach Anspruch 5,
**dadurch gekennzeichnet,**
**dass** das Einwirken auf den gefährlichen Bereich durch die Maschinensteuerung (5) in Abhängigkeit der festgestellten Eindringgeschwindigkeit des identifizierten Objekts (8, 13) erfolgt.

7. Verfahren nach einem der Ansprüche 1 bis 5,
**dadurch gekennzeichnet,**
**dass** die Sicherung des gefährlichen Bereichs durch Einwirkung der Maschinensteuerung (5) in Abhängigkeit der mittels des Sensors (40, 41) erkannten Form des identifizierten Objekts (8, 13) erfolgt

8. Druckmaschine (10) wobei ein gefährlicher Bereich (1, 11) der Druckmaschine mit wenigstens einem Sensor (40, 41) überwacht wird, welcher zur Identifikation von in den gefährlichen Bereich eindringenden Objekten (8, 13) vorgesehen ist und mit einer Maschincnstcucrung (5) der Druckmaschine (10) in Verbindung (6) steht, und wobei beim Eindringen eines Objekts (8, 13) in den gefährlichen Bereich dieses Objekt (8,13) mittels des Sensors (40, 41) identifiziert wird und in Abhängigkeit der Identifikation und des jeweiligen Betriebszustands von der Maschinensteuerung (5) der Druckmaschine (10) auf den Zustand des gefährlichen Bereichs der Maschine (1, 10, 11) eingewirkt wird,
**dadurch gekennzeichnet,**
**dass** der Sensor (40,41) zur dreidimensionalen Abtastung des in den gefährlichen Bereich eindringendes Objektes (8, 13) vorgesehen ist.

## Claims

1. Method of safeguarding hazardous areas in machines (1, 10, 11), such a hazardous area being monitored by at least one sensor (40, 41) suitable for identifying objects (8, 13) that penetrate into the hazardous area and provided with a connection (6) to a machine control system (5), and, upon penetration of an object (8, 13) into the hazardous area, this object (8, 13) being identified by means of the sensor (40, 41), and a state of the hazardous area in the machine (1, 10, 11) being influenced by means of the machine control system (5) as a function of the identification and of the respective operating condition of the machine (1, 10, 11),
**characterized in**
**that** the sensor (40, 41) carries out a three-dimensional scanning of the object (8, 13) that penetrates into the hazardous area.

2. Method according to Claim 1,
**characterized in**
**that** the sensor (40) is a 3-D camera.

3. Method according to any one of the preceding claims,
**characterized in**
**that** the machine control system (5) acts on hazardous parts (15) of the machine (1, 10, 11) in the hazardous area.

4. Method according to Claim 3,
**characterized in**
**that** the machine control system (5) brings hazardous parts (15) of the machine (1, 10, 11) in the hazardous area into a safe state.

5. Method according to any one of the preceding claims,
**characterized in**
**that** the safeguarding of the hazardous area is carried out by an action of the machine control system (5) as a function of the penetrating movement of the identified object (8, 13) as detected by the sensor (40, 41).

6. Method according to Claim 5,
**characterized in**
**that** the acting on the hazardous area by means of the machine control system (5) is carried out as a function of the detected penetration speed of the identified object (8, 13).

7. Method according to any one of claims 1 to 5,
**characterized in**
**that** the safeguarding of the hazardous area by means of an action of the machine control system (5) is carried out as a function of the shape of the identified object (8, 13) as detected by the sensor (40, 41).

8. Printing press (10) wherein a hazardous area (1, 11) of the printing press is monitored by at least one sensor (40, 41) provided for identifying objects (8, 13) that penetrate into the hazardous area and connected to a machine control system (5) of the printing press (10) and wherein, upon penetration of the object (8, 13) into the hazardous area, the object (8, 13) is identified by the sensor (40, 41) and the machine control system (5) of the printing press (10) acts on the state of the hazardous area of the printing press (1, 10, 11) as a function of the identification and the respective operating condition,
**characterized in**
**that** the sensor (40, 41) is provided for the three-dimensional scanning of the object (8, 13) penetrating into the hazardous area.

## Revendications

1. Procédé pour la protection de zones dangereuses dans des machines (1, 10, 11), dans lequel une telle zone dangereuse est surveillée par au moins un capteur (40, 41), qui est apte à identifier des objets (8, 13) pénétrant dans la zone dangereuse et est en liaison (6) avec une commande de machine (5), et dans lequel, lors de la pénétration d'un objet (8, 13) dans la zone dangereuse, cet objet (8, 13) est identifié au moyen du capteur (40, 41) et, en fonction de l'identification et de l'état de fonctionnement respectif de la machine (1, 10, 11), la commande de machine (5) agit sur l'état de la zone dangereuse de la machine (1, 10, 11)
**caractérisé en ce qu'**une exploration tridimensionnelle de l'objet (8, 13) pénétrant dans la zone dangereuse est effectuée au moyen du capteur (40, 41).

2. Procédé selon la revendication 1, **caractérisé en ce que** le capteur (40) est une caméra 3D.

3. Procédé selon l'une des revendications précédentes, **caractérisé en ce que** la commande de machine (5) agit sur des parties dangereuses (15) de la machine (1, 10, 11) dans la zone dangereuse.

4. Procédé selon la revendication 3, **caractérisé en ce que** la commande de machine (5) transfère dans une position sûre les parties dangereuses (15) de la machine (1, 10, 11) dans la zone dangereuse.

5. Procédé selon l'une des revendications précédentes, **caractérisé en ce que** la protection de la zone dangereuse est assurée par l'action de la commande de machine (5) en fonction du mouvement de pénétration, constaté par le capteur (40, 41), de l'objet (8, 13) identifié.

6. Procédé selon la revendication 5, **caractérisé en ce que** la commande de machine (5) agit sur la zone dangereuse en fonction de la vitesse de pénétration constatée pour l'objet (8, 13) identifié.

7. Procédé selon l'une quelconque des revendications 1 à 5, **caractérisé en ce que** la commande de machine (5) agit sur la zone dangereuse en fonction de la forme de l'objet (8, 13) identifié, détectée par le capteur (40, 41).

8. Machine à imprimer (10), dans laquelle une zone dangereuse (1, 11) de la machine à imprimer est surveillée par au moins un capteur (40, 41), qui est prévu pour identifier des objets (8, 13) pénétrant dans la zone dangereuse et est en liaison (6) avec une commande (5) de la machine à imprimer (10), et dans laquelle, lors de la pénétration d'un objet (8, 13) dans la zone dangereuse, cet objet (8, 13) est identifié au moyen du capteur (40, 41) et, en fonction de l'identification et de l'état de fonctionnement respectif, la commande (5) de la machine à imprimer (10) agit sur l'état de la zone dangereuse de la machine (1, 10, 11),
**caractérisée en ce que** le capteur (40, 41) est prévu pour une exploration tridimensionnelle de l'objet (8, 13) pénétrant dans la zone dangereuse.
